# EUROPEAN PATENT APPLICATION

(11) **EP 4 701 037 A1**
(43) Date of publication of application: **25.02.2026**
(21) Application number: 24883588.6
(22) Date of filing: 11.09.2024
(51) Int. Cl.: H02J 7/10, H02J 7/00

(54) **HYBRID CHARGING SYSTEM**

(30) Priority: 12.07.2024 CN 202421646659 U
(71) Applicant: Contemporary Amperex Technology Co., Limited, Jiaocheng District Ningde Fujian 352100 (CN); Contemporary Amperex Future Energy Technology (Shenzhen) Limited, Shenzhen, Guangdong 518100 (CN)
(72) Inventor: XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Gong, Jinping
(86) International application number: PCT/CN2024/118337
(87) International publication number: WO 2026/011554

(57) **Abstract**

Embodiments of this disclosure disclose a hybrid charging system, including at least one storage and charging integrated system and an energy storage and supplementation system. The storage and charging integrated system includes an energy storage apparatus and a charging apparatus. The energy storage apparatus is connected to both a direct-current bus and the charging apparatus. The charging apparatus is connected to both a charging gun and the direct-current bus, and is configured to transfer electrical energy in an electric device to the energy storage apparatus and/or a power grid, or to transfer electrical energy in the power grid and/or electrical energy in the energy storage apparatus to the electric device. The energy storage and supplementation system includes a second-life battery pack connected to the direct-current bus. Electrical energy in the second-life battery pack is transferred to the storage and charging integrated system through the direct-current bus, or the electrical energy in the power grid or electrical energy in the storage and charging integrated system is stored through the direct-current bus. The second-life battery pack is connected to the hybrid charging system. This not only addresses the issue of retired battery disposal but also improves efficient conversion and storage of electrical energy in the hybrid charging system.

## Description

### CROSS-REFERENCE TO RELATED APPLICATIONS

This disclosure claims priority to Chinese Patent Application No. 202421646659.X, filed on July 12, 2024 and entitled "HYBRID CHARGING SYSTEM", which is incorporated herein by reference in its entirety.

### TECHNICAL FIELD

This disclosure relates to, but is not limited to, the field of charging and discharging technologies, and in particular, to a hybrid charging system.

### BACKGROUND

With rapid increase in the number of electric devices, issues such as slow charging and poor user experience of the electric devices need to be addressed urgently. To meet charging demands of electric devices in different scenarios, various charging modes have emerged, including a high-power mode for fast charging of electric devices. In related art, this is achieved by configuring an additional transformer or upgrading a transformer capacity. However, in this method, construction costs of a charging system increase, and the charging system requires a larger footprint.

Furthermore, electric devices face a problem of battery replacement. As the number of electric devices rapidly increases, the number of retired batteries (such as second-hand batteries or recycled batteries) significantly increases, making the disposal of retired batteries an urgent issue that needs to be addressed.

### SUMMARY

In view of this, embodiments of this disclosure provide at least a hybrid charging system.

The technical solution in the embodiments of this disclosure is implemented as follows.

In one aspect, an embodiment of this disclosure provides a hybrid charging system, including at least one storage and charging integrated system and an energy storage and supplementation system.

The storage and charging integrated system includes an energy storage apparatus and a charging apparatus.

One end of the energy storage apparatus is connected to a direct-current bus, and the other end of the energy storage apparatus is connected to the charging apparatus. One end of the charging apparatus is connected to a charging gun, and the other end is connected to the direct-current bus.

The charging apparatus is configured to transfer electrical energy in an electric device to the energy storage apparatus and/or a power grid, or to transfer electrical energy in the power grid and/or electrical energy in the energy storage apparatus to the electric device.

The energy storage and supplementation system includes a second-life battery pack connected to the direct-current bus. The energy storage and supplementation system includes a second-life battery pack connected to the direct-current bus. Electrical energy in the second-life battery pack is transferred to the storage and charging integrated system through the direct-current bus, or the electrical energy in the power grid or electrical energy in the storage and charging integrated system is stored in the second-life battery pack through the direct-current bus.

In this embodiment of this disclosure, the energy storage and supplementation system is quickly connected to the hybrid charging system. Such method can realize disposal of retired batteries, alleviating pollution of retired batteries to the environment, extending battery life, and improving resource utilization efficiency. In addition, the energy storage and supplementation system is applied to the hybrid charging system. Consequently, efficient conversion and storage of electrical energy in the hybrid charging system can be improved.

In some embodiments, the charging apparatus includes a bidirectional direct current direct current converter (Direct Current Direct Current Converter, DC/DC). The charging apparatus is configured to transfer electrical energy in the electric device to the energy storage apparatus and/or the power grid, or to transfer the electrical energy in the power grid and/or the electrical energy in the energy storage apparatus to the electric device through the directional DC/DC apparatus.

In this embodiment of this disclosure, the storage and charging integrated system includes both the energy storage apparatus and the charging apparatus, so that the hybrid charging system supports a plurality of charging modes, meeting charging demands of electric devices in a plurality of scenarios. In addition, in current markets, different charging modes are provided to users by configuring an additional transformer or upgrading a transformer capacity. However, in this method, construction costs increase, and a larger footprint is required. With such storage and charging integrated system, a plurality of charging modes can be provided to users without adding transformers, lowering construction costs.

In some embodiments, the energy storage and supplementation system includes at least one bidirectional DC/DC apparatus and a second-life battery pack corresponding to the bidirectional DC/DC apparatus. One end of the bidirectional DC/DC apparatus is connected to the direct-current bus, and the other end is connected to the second-life battery pack.

In this embodiment of this disclosure, in the energy storage and supplementation system, a plurality of second-life battery packs are first connected in series and connected to the bidirectional DC/DC apparatus, forming a battery cluster in the energy storage and supplementation system. Then, the energy storage and supplementation system can be quickly formed by the plurality of battery clusters. Ultimately, bidirectional DC/DC apparatuses of all the battery clusters are connected to the direct-current bus. The energy storage and supplementation system can be quickly connected to the hybrid charging system. Such method can realize disposal of retired batteries, alleviating pollution of retired batteries to the environment, extending battery life, and improving resource utilization efficiency. In addition, the energy storage and supplementation system is applied to the hybrid charging system. Consequently, efficient conversion and storage of electrical energy in the hybrid charging system can be improved.

In addition, when the power grid is under high pressure, the energy storage apparatus and/or the energy storage and supplementation system in the hybrid charging system can charge the electric device, thereby reducing pressure on the power grid.

In some embodiments, the energy storage apparatus and/or the charging apparatus satisfies one or more of the following conditions:
a ratio of rated energy of the energy storage apparatus to a maximum discharge power of the energy storage apparatus is not greater than 1:3;
an energy density of the energy storage apparatus is greater than or equal to 380 watt-hours per liter;
a ratio of the rated energy of the energy storage apparatus to a maximum charge power of the charging apparatus is less than 1:4; and
a ratio of the rated energy of the energy storage apparatus to a rated power of the energy storage apparatus is less than or equal to 1:4.

In this embodiment of this disclosure, relationships between the parameters of the energy storage apparatus and/or the charging apparatus are limited, allowing for a small size and/or capacity but a large output power of the battery in the energy storage apparatus. In this way, a footprint of the hybrid charging system is reduced, and expenditure on land is lowered, making the hybrid charging system economical.

In some embodiments, the energy storage and supplementation system satisfies the following condition: a ratio of an energy value of a single-cluster battery system to a power value of the bidirectional DC/DC apparatus is not less than 3:1.

In this embodiment of this disclosure, relationships between the parameters of the energy storage and supplementation system are limited, so that the battery packs in the energy storage and supplementation system are cooled through free cooling rather than air cooling or liquid cooling, to enable the battery packs to normally operate. Such method does not require an additional thermal management system, and therefore reduces construction costs of the hybrid charging system.

In some embodiments, the hybrid charging system further includes a bidirectional alternating current direct current converter (Alternating Current Direct Current Converter, AC/DC) in a quantity corresponding to the at least one storage and charging integrated system.

One end of the bidirectional AC/DC apparatus is connected to the power grid, and the other end is connected to the direct-current bus. The bidirectional AC/DC apparatus is configured to convert the electrical energy in the power grid into a direct current and then transfer the direct current to the direct-current bus, or to convert the electrical energy in the direct-current bus into an alternating current and then transfer the alternating current to the power grid.

In this embodiment of this disclosure, the bidirectional AC/DC apparatus can bidirectionally transfer electrical energy between the power grid and the hybrid charging system.

In some embodiments, the hybrid charging system further includes a transformer and an electricity meter.

One end of the transformer is connected to the electricity meter, and the other end is connected to the power grid. The transformer is configured to perform voltage conversion on the electrical energy in the power grid and then provide electrical energy to a load on the power grid or the electric device. The electricity meter is configured to determine current electrical energy in the transformer.

In this embodiment of this disclosure, smart distribution of electrical energy in the transformer can be implemented by monitoring the electrical energy in the transformer with the electricity meter.

In some embodiments, the hybrid charging system further includes at least one alternating-current charging system.

The alternating-current charging system includes a bidirectional direct current alternating current converter (Direct Current Alternating Current Converter, DC/AC) and an alternating-current charging pile.

One end of the bidirectional DC/AC apparatus is connected to the direct-current bus, and the other end is connected to the alternating-current charging pile. The bidirectional DC/AC apparatus is configured to convert the electrical energy in the direct-current bus into an alternating current and then transfer the alternating current to the alternating-current charging pile, or to convert electrical energy of the alternating-current charging pile into a direct current and then transfer the direct current to the direct-current bus.

The alternating-current charging pile is configured to transfer the electrical energy from the electric device to the bidirectional DC/AC apparatus, or to transfer the electrical energy from the bidirectional DC/AC apparatus to the electric device.

In this embodiment of this disclosure, the alternating-current charging pile system is connected to the hybrid charging system, so that a user can charge an electric device through the alternating-current charging pile system when the power grid is under low pressure, and the electric device performs discharge to the power grid when the power grid is under high pressure. In this way, electricity arbitrage is achieved to increase the income of the user.

In some embodiments, the hybrid charging system further includes at least one alternating-current charging system.

The alternating-current charging system includes an alternating-current charging pile, and the alternating-current charging pile is connected to the power grid. The alternating-current charging pile is configured to transfer the electrical energy in the power grid to the electric device, or to transfer the electrical energy in the electric device to the power grid.

In this embodiment of this disclosure, the alternating-current charging pile system is connected to the hybrid charging system, so that a user can charge an electric device through the alternating-current charging pile system when the power grid is under low pressure, and the electric device performs discharge to the power grid when the power grid is under high pressure. In this way, electricity arbitrage is achieved to increase the income of the user.

In some embodiments, the hybrid charging system further includes a photovoltaic system and an energy storage system.

The photovoltaic system includes at least one maximum power point tracking apparatus and a photovoltaic panel apparatus corresponding to the maximum power point tracking apparatus. One end of the maximum power point tracking apparatus is connected to the direct-current bus, and the other end is connected to the photovoltaic panel apparatus. The maximum power point tracking apparatus is configured to enable the photovoltaic panel apparatus to operate close to a maximum power point, and to transfer the electrical energy in the photovoltaic panel apparatus to the direct-current bus. The photovoltaic panel apparatus is configured to convert solar energy into electrical energy.

The energy storage system is connected to the direct-current bus. The energy storage system is configured to store electrical energy in the direct-current bus or release electrical energy to the direct-current bus.

In this embodiment of this disclosure, the photovoltaic system directly converts solar radiation energy into electrical energy through the photovoltaic panel apparatus. This energy conversion process does not pollute the environment or damage the ecology, and provides clean, safe, and renewable energy sources. The energy storage system can store surplus electrical energy in the hybrid charging system and release electrical energy as required, achieving balance and stable supply of energy. Therefore, with such hybrid charging system including the photovoltaic system and the energy storage system, efficient conversion and storage of energy are achieved, dependence on fossil fuels is reduced, and carbon emissions are reduced, facilitating environmental protection.

It should be understood that the foregoing general descriptions and the following detailed descriptions are merely examples and illustrations and are not intended to limit the technical solutions of this disclosure.

### BRIEF DESCRIPTION OF DRAWINGS

The accompanying drawings herein are incorporated into this specification and form a part of this specification. These accompanying drawings illustrate embodiments conforming to this disclosure and are intended to explain the technical solutions of this disclosure together with this specification.
FIG. 1 is a first schematic diagram of an implementation of a hybrid charging system provided in an embodiment of this disclosure;
FIG. 2 is a second schematic diagram of an implementation of a hybrid charging system provided in an embodiment of this disclosure;
FIG. 3 is a schematic diagram of connection of battery clusters in an energy storage and supplementation system provided in an embodiment of this disclosure;
FIG. 4 is a third schematic diagram of an implementation of a hybrid charging system provided in an embodiment of this disclosure;
FIG. 5 is a fourth schematic diagram of an implementation of a hybrid charging system provided in an embodiment of this disclosure;
FIG. 6 is a fifth schematic diagram of an implementation of a hybrid charging system provided in an embodiment of this disclosure;
FIG. 7 is a sixth schematic diagram of an implementation of a hybrid charging system provided in an embodiment of this disclosure; and
FIG. 8 is a seventh schematic diagram of an implementation of a hybrid charging system provided in an embodiment of this disclosure.

Reference signs: 1. communication line; 11. alternating-current charging system; 111. bidirectional DC/AC apparatus; 112. alternating-current charging pile; 113. alternating-current control unit; 21. storage and charging integrated system; 211. wireless communication module; 212. energy storage apparatus; 213. charging apparatus; 214. control unit; 216. charging gun; 3. energy storage and supplementation system; 31. energy storage and supplementation control unit; 311. bidirectional DC/DC apparatus; 312. second-life battery pack; 4. photovoltaic system; 41. photovoltaic system control unit; 411. photovoltaic panel apparatus; 412. MPPT apparatus; 215. bidirectional AC/DC apparatus; 8. direct-current bus; 5. energy storage system; 9. load; 6. electricity meter; 7. transformer; and 10. power grid.

### DESCRIPTION OF EMBODIMENTS

To clarify objectives, technical solutions, and advantages of the embodiments of this disclosure, disclosed specific technical solutions are further described in detail with reference to accompanying drawings of the embodiments in this disclosure. The following embodiments are used to illustrate this disclosure, but not to limit the scope of this disclosure.

In the following descriptions, the term "some embodiments" describe subsets of all possible embodiments, but it can be understood that "some embodiments" may be the same subsets or different subsets of all possible embodiments, and can be combined with each other without conflict.

In the following descriptions, terms such as "first", "second", and "third" are merely used as examples to distinguish different objects, but do not represent a specific rank of objects nor imply any sequential limitation. It can be understood that the specific ranks or sequence of the terms "first", "second", and "third" are interchangeable when permitted, so that the embodiments of this disclosure described therein can be implemented in a sequence other than a sequence illustrated or described herein.

Unless otherwise defined, all technical and scientific terms used in this disclosure have the same meanings as those commonly understood by persons skilled in the art belonging to the technical field of this disclosure. The terms used herein are only used for the purpose of describing the embodiments of this disclosure and are not intended to limit this disclosure.

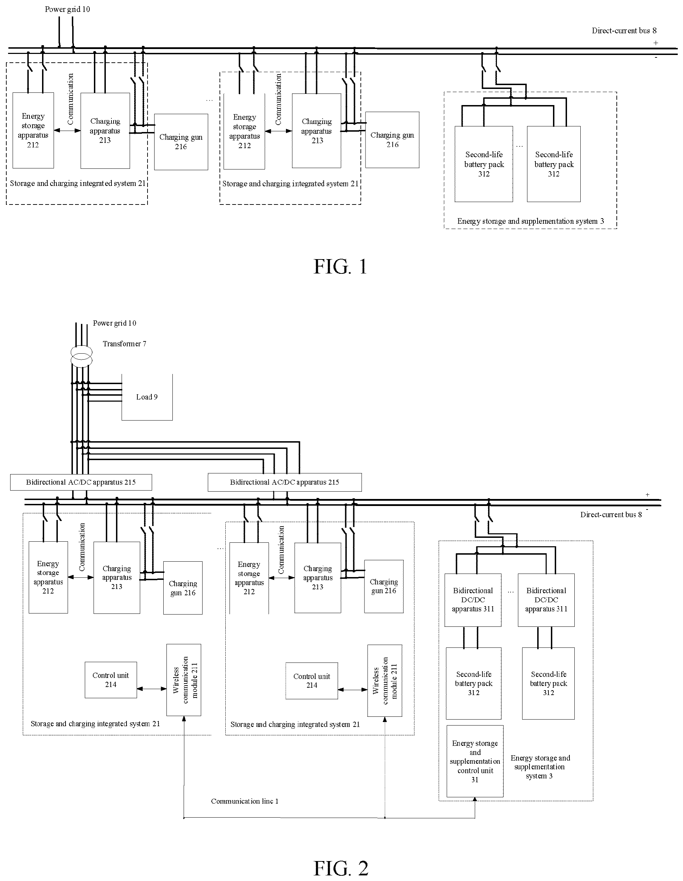

An embodiment of this disclosure provides a hybrid charging system. As shown in FIG. 1, the hybrid charging system includes at least one storage and charging integrated system 21 and an energy storage and supplementation system 3.

The storage and charging integrated system 21 includes an energy storage apparatus 212 and a charging apparatus 213.

One end of the energy storage apparatus 212 is connected to a power grid 10 through a direct-current bus 8, and the other end of the energy storage apparatus 212 is connected to the charging apparatus 213. One end of the charging apparatus 213 is connected to a charging gun 216, and the other end is connected to the direct-current bus 8. The charging gun 216 is connected to an electric device. The electric device in this instance may be an electric vehicle or another device powered by a traction battery. The storage and charging integrated system 21 not only charges the electric device but also stores surplus electrical energy of the electric device in the energy storage apparatus 212 of the storage and charging integrated system 21 or in the energy storage and supplementation system 3 in this disclosure.

The charging apparatus 213 is configured to transfer electrical energy in the electric device to the energy storage apparatus 212 and/or the power grid 10, or to transfer electrical energy in the power grid 10 and/or electrical energy in the energy storage apparatus 212 to the electric device.

The energy storage and supplementation system 3 includes at least one second-life battery pack 312 connected to the direct-current bus 8, where electrical energy in the second-life battery pack 312 is transferred to the storage and charging integrated system 21 through the direct-current bus 8, or the electrical energy in the power grid 10 or electrical energy in the storage and charging integrated system 21 is stored in the second-life battery pack 312 through the direct-current bus 8.

In this embodiment of this disclosure, the energy storage and supplementation system is quickly connected to the hybrid charging system. Such method can realize disposal of retired batteries, alleviating pollution of retired batteries to the environment, extending battery life, and improving resource utilization efficiency. In addition, the energy storage and supplementation system is applied to the hybrid charging system. Consequently, efficient conversion and storage of electrical energy in the hybrid charging system can be improved.

It should be noted that in this embodiment of this disclosure, the charging gun is not included in the storage and charging integrated system. Some ports may be provided for the storage and charging integrated system, and the charging gun is connected to the storage and charging integrated system through the ports. In some other embodiments, the storage and charging integrated system further includes a charging gun.

An embodiment of this disclosure provides a hybrid charging system. As shown in FIG. 2, the hybrid charging system includes at least one storage and charging integrated system and an energy storage and supplementation system.

Herein, the at least one storage and charging integrated system may be N storage and charging integrated systems, in other words, the hybrid charging system includes N storage and charging integrated systems 21, where N is an integer greater than 1.

The storage and charging integrated system 21 includes an energy storage apparatus 212 and a charging apparatus 213.

One end of the energy storage apparatus 212 is connected to a direct-current bus 8, so as to output electrical energy in the energy storage apparatus 212 to a power grid 10. The other end of the energy storage apparatus 212 is connected to the charging apparatus 213, to charge an electric device through the charging apparatus 213 and a charging gun 216. The energy storage apparatus 212 is configured to charge the electric device through the charging apparatus 213, or output the electrical energy in the energy storage apparatus 212 to the direct-current bus 8.

Herein, charging or discharging of the electric device can be implemented only after the electric device is connected to the charging gun in the storage and charging integrated system.

In some embodiments, the electrical energy in the direct-current bus may be transferred to the energy storage apparatus, to charge the energy storage apparatus.

The charging apparatus includes a bidirectional DC/DC apparatus, with one end of the charging apparatus 213 connected to the charging gun 216 and the other end connected to the direct-current bus 8.

The charging apparatus 213 is configured to transfer electrical energy in the electric device to the energy storage apparatus 212 and/or the power grid 10, or to transfer electrical energy in the power grid 10 and/or the electrical energy in the energy storage apparatus 212 to the electric device through the bidirectional DC/DC apparatus.

Herein, the electrical energy in the electric device is a direct current, and the electrical energy in the energy storage apparatus is a direct current. Therefore, the electrical energy in the electric device can be transferred to the energy storage apparatus by the bidirectional DC/DC apparatus, and/or the electrical energy in the electric device can be transferred to the direct-current bus by the bidirectional DC/DC apparatus. Then, the electrical energy in the direct-current bus can be converted into an alternating current and then transferred to the power grid by a bidirectional AC/DC apparatus connected to the power grid and the direct-current bus, or the electrical energy in the power grid can be converted into a direct current and then transferred to the direct-current bus by the bidirectional AC/DC apparatus. Then, the electrical energy in the direct-current bus can be transferred to the electric device by the bidirectional DC/DC apparatus, and/or the electrical energy in the energy storage apparatus can be transferred to the electric device by the bidirectional DC/DC apparatus.

In some embodiments, the storage and charging integrated system 21 further includes a control unit 214 and a wireless communication module 211.

The control unit 214 is configured to determine and control operation of the charging apparatus 213 and the energy storage apparatus 212 in the storage and charging integrated system 21. One end of the wireless communication module 211 is connected to the control unit 214, and the other end is connected to a communication line 1. The wireless communication module 211 is configured to communicate with another system in the hybrid charging system.

Herein, the operation of the charging apparatus may include transferring the electrical energy in the electric device to the energy storage apparatus or the direct-current bus, or transferring the electrical energy in the direct-current bus or the energy storage apparatus to the electric device. The operation of the energy storage apparatus may include receiving the electrical energy transferred from the charging apparatus, or discharging electrical energy in the energy storage apparatus through the charging apparatus.

The another system in the hybrid charging system herein refers to a system other than the storage and charging integrated system in the hybrid charging system, for example, the energy storage and supplementation system or a photovoltaic system.

The energy storage and supplementation system 3 includes at least one bidirectional DC/DC apparatus 311 and a second-life battery pack 312 corresponding to the bidirectional DC/DC apparatus 311.

One end of the bidirectional DC/DC apparatus 311 is connected to the direct-current bus 8, and the other end is connected to the second-life battery pack 312. The bidirectional DC/DC apparatus 311 is configured to transfer electrical energy in the second-life battery pack 312 to the direct-current bus 8, or to transfer the electrical energy in the direct-current bus 8 to the second-life battery pack 312.

It should be noted that the at least one bidirectional DC/DC apparatus may be P bidirectional DC/DC apparatuses, in other words, the energy storage and supplementation system 3 includes P bidirectional DC/DC apparatuses 311, where P is an integer greater than 1.

Herein, the second-life battery pack refers to a battery pack in which a used power battery, whose performance declines to a certain extent, is reused in another field after undergoing testing, evaluation, repair, and other technical processing.

The electrical energy in the second-life battery pack is a direct current. Therefore, the electrical energy in the second-life battery pack may be transferred to the direct-current bus by the bidirectional DC/DC apparatus, and then the electrical energy in the direct-current bus is converted into an alternating current before being transferred to the power grid by the bidirectional AC/DC apparatus to discharge the second-life battery pack. Alternatively, the electrical energy in the power grid is converted into a direct current and then transferred to the direct-current bus by the bidirectional AC/DC apparatus. Then, the electrical energy in the direct-current bus is transferred to the second-life battery pack by the bidirectional DC/DC apparatus to charge the second-life battery pack.

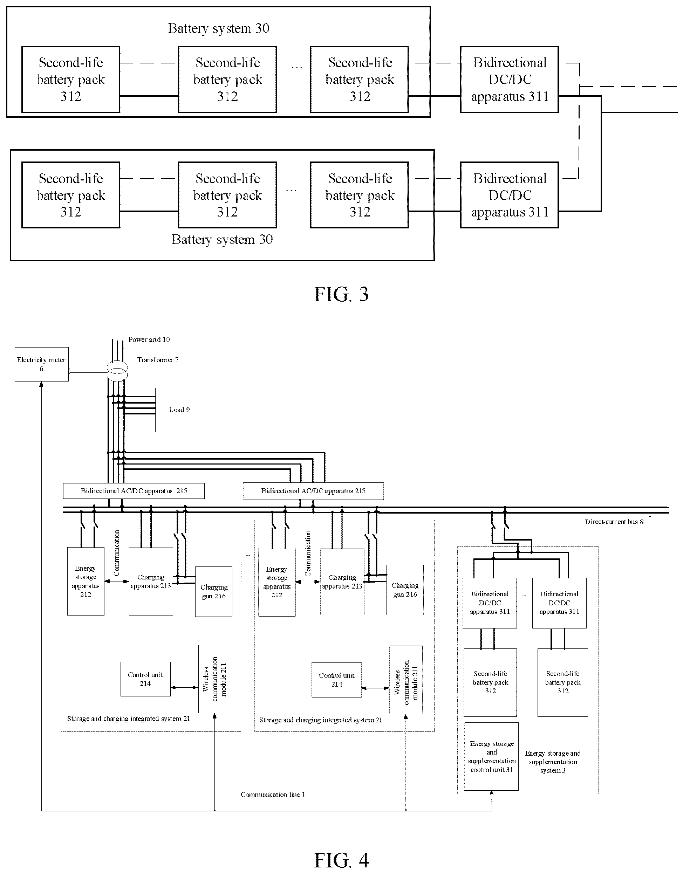

FIG. 3 shows a connection manner of battery clusters in an energy storage and supplementation system. The energy storage and supplementation system includes two battery systems 30. Each battery system 30 includes a plurality of second-life battery packs 312. The plurality of second-life battery packs 312 are connected in series and connected to a bidirectional DC/DC apparatus 311. In this way, a battery cluster in the energy storage and supplementation system can be formed to output high voltage.

Herein, the plurality of second-life battery packs refer to two or more second-life battery packs, for example, two, three, or four second-life battery packs 312. In this embodiment, a retired battery in the second-life battery pack may take some tests. After passing the tests, the battery can be used without being reprocessed.

In some embodiments, the energy storage and supplementation system 3 further includes an energy storage and supplementation control unit 31.

The energy storage and supplementation control unit 31 is configured to determine and control operation of the bidirectional DC/DC apparatus 311 and the second-life battery packs 312 in the energy storage and supplementation system 3. The energy storage and supplementation control unit 31 is connected to the communication line 1 to further communicate with another system in the hybrid charging system.

Herein, the operation of the bidirectional DC/DC apparatus may include transferring the electrical energy in the direct-current bus to the second-life battery pack, or transferring the electrical energy in the second-life battery pack to the direct-current bus. The operation of the second-life battery pack may include receiving electrical energy transferred by the bidirectional DC/DC apparatus, or discharging the electrical energy in the second-life battery pack through the bidirectional DC/DC apparatus.

It should be noted that the another system in the hybrid charging system refers to a system other than the energy storage and supplementation system in the hybrid charging system, for example, the storage and charging integrated system or a photovoltaic system.

In this embodiment of this disclosure, the storage and charging integrated system includes both the energy storage apparatus and the charging apparatus, so that the hybrid charging system supports a plurality of charging modes, meeting charging demands of electric devices in a plurality of scenarios. In addition, in current markets, different charging modes are provided to users by configuring an additional transformer or upgrading a transformer capacity. However, in this method, construction costs increase, and a larger footprint is required. With such storage and charging integrated system, a plurality of charging modes can be provided to users without adding transformers, lowering construction costs.

In the energy storage and supplementation system, the plurality of second-life battery packs are first connected in series and connected to the bidirectional DC/DC apparatus, forming a battery cluster in the energy storage and supplementation system. Then, the energy storage and supplementation system can be quickly formed by a plurality of battery clusters. Ultimately, bidirectional DC/DC apparatuses of all the battery clusters are connected to the direct-current bus. The energy storage and supplementation system is quickly connected to the hybrid charging system. Such method can realize disposal of retired batteries, alleviating pollution of retired batteries to the environment, extending battery life, and improving resource utilization efficiency. In addition, the energy storage and supplementation system is applied to the hybrid charging system. Consequently, efficient conversion and storage of electrical energy in the hybrid charging system can be improved.

In addition, when the power grid is under high pressure, the energy storage apparatus and/or the energy storage and supplementation system in the hybrid charging system can charge the electric device, thereby reducing pressure on the power grid.

In some embodiments, an input power of the energy storage apparatus 212 is less than 150 kilowatts. In a case that a charging mode of the storage and charging integrated system 21 includes a first charging mode, an output power of the energy storage apparatus 212 is greater than or equal to 300 kilowatts.

In a case that the charging mode of the storage and charging integrated system 21 includes a second charging mode, the output power of the energy storage apparatus 212 is less than 300 kilowatts.

Herein, the charging mode usually refers to a charging manner in which the charging apparatus charges the electric device. The charging apparatus may include at least one charging mode, for example, the first charging mode and the second charging mode. During implementation, the first charging mode may be a supercharging mode, meaning that in the supercharging mode, the output power of the energy storage apparatus is greater than or equal to 300 kilowatts. For example, the output power of the energy storage apparatus is 300 kilowatts. For another example, the output power of the energy storage apparatus is 450 kilowatts. For still another example, the output power of the energy storage apparatus is 400 kilowatts. The second charging mode may be a fast charging mode, meaning that in the fast charging mode, the output power of the energy storage apparatus is less than 300 kilowatts. For example, the output power of the energy storage apparatus is 200 kilowatts. For another example, the output power of the energy storage apparatus is 150 kilowatts. For still another example, the output power of the energy storage apparatus is 40 kilowatts.

In this embodiment of this disclosure, the input power of the energy storage apparatus and output power ranges of the energy storage apparatus for different charging modes are provided, so that the hybrid charging system can support a plurality of charging modes.

In some embodiments, a ratio of rated energy of the energy storage apparatus 212 to a rated power of the energy storage apparatus 212 is less than or equal to 1:4.

It should be noted that rated energy is usually measured in watt-hour (Wh), and power is measured in watt (W). The ratio herein is a value ratio of the rated energy to the rated power, and the value ratio is less than or equal to 1:4.

In some embodiments, the energy storage apparatus 212 and/or the charging apparatus 213 satisfies one or more of the following conditions:
a ratio of the rated energy of the energy storage apparatus to a maximum discharge power of the energy storage apparatus is not greater than 1:3;
an energy density of the energy storage apparatus is greater than or equal to 380 watt-hours per liter; and
a ratio of the rated energy of the energy storage apparatus to a maximum charge power of the charging apparatus is less than 1:4.

In this embodiment of this disclosure, relationships between the parameters of the energy storage apparatus and/or the charging apparatus are limited, allowing for a small size and/or capacity but a large output power of the battery in the energy storage apparatus. In this way, a footprint of the hybrid charging system is reduced, and expenditure on land is lowered, making the hybrid charging system economical.

In some embodiments, the energy storage and supplementation system satisfies the following condition: a ratio of an energy value of a single-cluster battery system to a power value of the bidirectional DC/DC apparatus is not less than 3:1.

It should be noted that energy is usually measured in Wh, and power is measured in W. The ratio herein is a value ratio of energy of a single-cluster battery system to a power of the single-cluster battery system, and the value ratio is not greater than 3:1.

Herein, a single battery system includes a plurality of second-life battery packs in a single battery cluster. FIG. 3 is used as an example. FIG. 3 includes two battery systems 30. Each battery system 30 includes a plurality of second-life battery packs 312.

In this embodiment of this disclosure, relationships between the parameters of the energy storage and supplementation system are limited, so that the battery packs in the energy storage and supplementation system are cooled through free cooling rather than air cooling or liquid cooling, to enable the battery packs to normally operate. Such method does not require an additional thermal management system, and therefore reduces construction costs of the hybrid charging system.

An embodiment of this disclosure provides a hybrid charging system. As shown in FIG. 2, the hybrid charging system includes a bidirectional AC/DC apparatus 215 in a quantity corresponding to the at least one storage and charging integrated system.

One end of the bidirectional AC/DC apparatus 215 is connected to the power grid 10, and the other end is connected to the direct-current bus 8. The bidirectional AC/DC apparatus 215 is configured to convert the electrical energy in the power grid 10 into a direct current and then transfer the direct current to the direct-current bus 8, or to convert the electrical energy in the direct-current bus 8 into an alternating current and then transfer the alternating current to the power grid 10.

Herein, the electrical energy in the power grid is an alternating current, and the electrical energy in the direct-current bus is a direct current. Therefore, the alternating current in the power grid can be converted into a direct current and then transferred to the direct-current bus by the bidirectional AC/DC apparatus; alternatively, the direct current in the direct-current bus can be converted into an alternating current and then transferred to the power grid by the bidirectional AC/DC apparatus.

In this embodiment of this disclosure, the bidirectional AC/DC apparatus can bidirectionally transfer electrical energy between the power grid and the hybrid charging system.

An embodiment of this disclosure provides a hybrid charging system. As shown in FIG. 4, the hybrid charging system includes a transformer 7 and an electricity meter 6.

One end of the transformer 7 is connected to the electricity meter 6, and the other end is connected to the power grid 10. The transformer 7 is configured to perform voltage conversion on the electrical energy in the power grid 10 and then provide electrical energy to a load 9 on the power grid 10 and/or the electric device. The electricity meter 6 is configured to determine current electrical energy in the transformer 7.

In some embodiments, the transformer 7 is configured to provide electrical energy to the load 9, and/or provide electrical energy to the electric device through an alternating-current charging system and/or the storage and charging integrated system 21. In this way, the electric device can be charged through the power grid.

During implementation, when the load 9 requires a small amount of electrical energy, the transformer 7 has surplus electrical energy after providing electrical energy to the load 9. When the electric device is connected to the charging gun, the transformer 7 may transfer the surplus electrical energy to the alternating-current charging system and/or the storage and charging integrated system 21 through the direct-current bus 8, so as to charge the electric device through the alternating-current charging system and/or the storage and charging integrated system 21, or transfer, through the direct-current bus 8, the surplus electrical energy to a relevant system that can store electrical energy such as the energy storage apparatus and the energy storage and supplementation system in the hybrid charging system, so as to charge the system that can store electrical energy in the hybrid charging system. When the load 9 requires a large amount of electrical energy, the transformer 7 provides all the electrical energy to the load 9, and the electric device can be charged by another system in the hybrid charging system.

In this embodiment of this disclosure, smart distribution of electrical energy in the transformer can be implemented by monitoring the electrical energy in the transformer with the electricity meter.

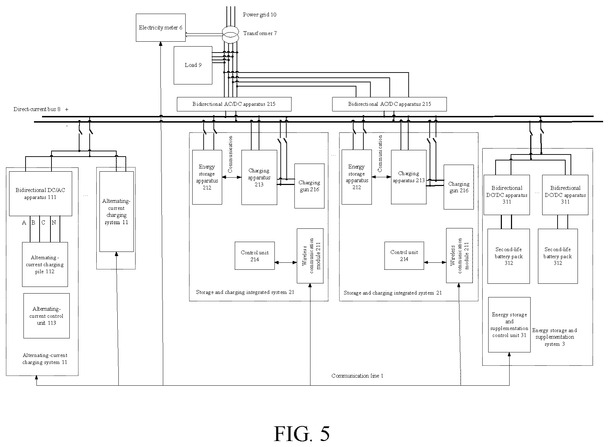

An embodiment of this disclosure provides a hybrid charging system. As shown in FIG. 5, the hybrid charging system includes at least one alternating-current charging system.

Herein, the at least one alternating-current charging system may be M alternating-current charging systems, in other words, the hybrid charging system includes M alternating-current charging systems 11, where M is an integer greater than 1.

The alternating-current charging system 11 includes a bidirectional DC/AC apparatus 111 and an alternating-current charging pile 112.

One end of the bidirectional DC/AC apparatus 111 is connected to the direct-current bus 8, and the other end is connected to the alternating-current charging pile 112. The bidirectional DC/AC apparatus 111 is configured to convert the electrical energy in the direct-current bus 8 into an alternating current and then transfer the alternating current to the alternating-current charging pile 112, or to convert electrical energy of the alternating-current charging pile 112 into a direct current and then transfer the direct current to the direct-current bus 8.

The alternating-current charging pile 112 is configured to transfer the electrical energy from the electric device to the bidirectional DC/AC apparatus 111, or to transfer the electrical energy from the bidirectional DC/AC apparatus 111 to the electric device.

Herein, electrical energy input into the alternating-current charging pile is an alternating current. Therefore, the electrical energy in the direct-current bus can be converted into an alternating current and then transferred to the alternating-current charging pile by the bidirectional DC/AC apparatus; alternatively, the electrical energy in the alternating-current charging pile can be converted into a direct current and then transferred to the direct-current bus by the bidirectional DC/AC apparatus.

In some embodiments, the bidirectional DC/AC apparatus may be connected to the alternating-current charging pile 112 through a three-phase wire (ABCN), where the three-phase wire includes an A-phase wire, a B-phase wire, a C-phase wire, three-phase electrical power, and an N neutral wire (neutral line).

In some embodiments, the alternating-current charging system 11 further includes an alternating-current control unit 113.

The alternating-current control unit 113 is configured to determine and control operation of the bidirectional DC/AC apparatus 111 and the alternating-current charging pile 112 in the alternating-current charging system 11. The alternating-current control unit 113 is connected to the communication line 1 at one end to further communicate with another system in the hybrid charging system.

Herein, the operation of the bidirectional DC/AC apparatus may include converting the electrical energy in the direct-current bus into an alternating current and then transferring the alternating current to the alternating-current charging pile, or converting the electrical energy obtained by the alternating-current charging pile from the electric device into a direct current and then transferring the direct current to the direct-current bus. The operation of the alternating-current charging pile may include receiving the electrical energy transferred by the electric device or transferring electrical energy to the electric device.

It should be noted that the another system in the hybrid charging system refers to a system other than the alternating-current charging system in the hybrid charging system, for example, the storage and charging integrated system or a photovoltaic system.

In this embodiment of this disclosure, the alternating-current charging pile system is connected to the hybrid charging system, so that a user can charge an electric device through the alternating-current charging pile system when the power grid is under low pressure, and the electric device performs discharge to the power grid when the power grid is under high pressure. In this way, electricity arbitrage is achieved to increase the income of the user.

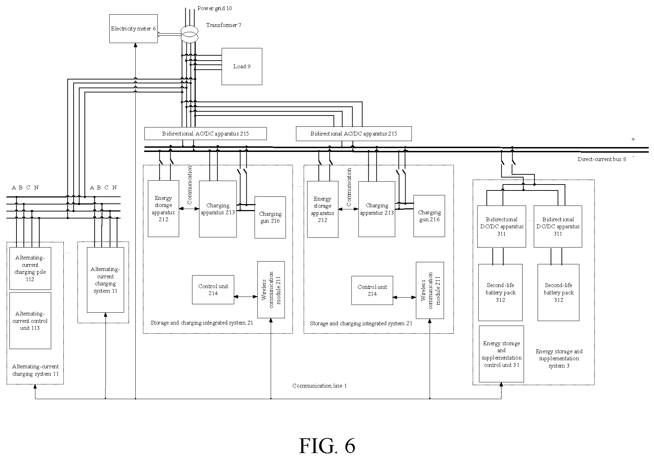

An embodiment of this disclosure provides a hybrid charging system. As shown in FIG. 6, the hybrid charging system includes at least one alternating-current charging system.

Herein, the at least one alternating-current charging system may be M alternating-current charging systems, in other words, the hybrid charging system includes M alternating-current charging systems 11, where M is an integer greater than 1.

The alternating-current charging system 11 includes an alternating-current charging pile 112, and the alternating-current charging pile 112 is connected to the power grid 10. The alternating-current charging pile 112 is configured to transfer the electrical energy in the power grid 10 to the electric device, or to transfer the electrical energy in the electric device to the power grid 10.

Herein, the alternating-current charging pile may be connected to the power grid through a three-phase wire (ABCN). Electrical energy input into the alternating-current charging pile is an alternating current, so that the electrical energy in the power grid can be transferred to the alternating-current charging pile; alternatively, the electrical energy in the alternating-current charging pile is converted into a direct current and then transferred to the power grid.

In some embodiments, the alternating-current charging system 11 further includes an alternating-current control unit 113.

The alternating-current control unit 113 is configured to determine and control operation of the alternating-current charging pile 112 in the alternating-current charging system 11. The alternating-current control unit 113 is connected to the communication line 1 at one end to communicate with another system in the hybrid charging system.

Herein, the operation of the alternating-current charging pile may include receiving the electrical energy from the electric device and transferring the electrical energy to the power grid, or transferring the electrical energy in the power grid to the electric device.

In this embodiment of this disclosure, the alternating-current charging pile system is connected to the hybrid charging system, so that a user can charge an electric device through the alternating-current charging pile system when the power grid is under low pressure, and the electric device performs discharge to the power grid when the power grid is under high pressure. In this way, electricity arbitrage is achieved to increase the income of the user.

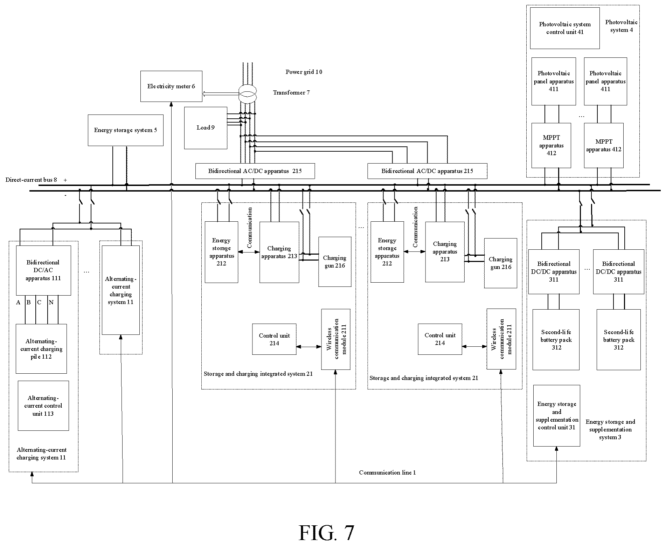

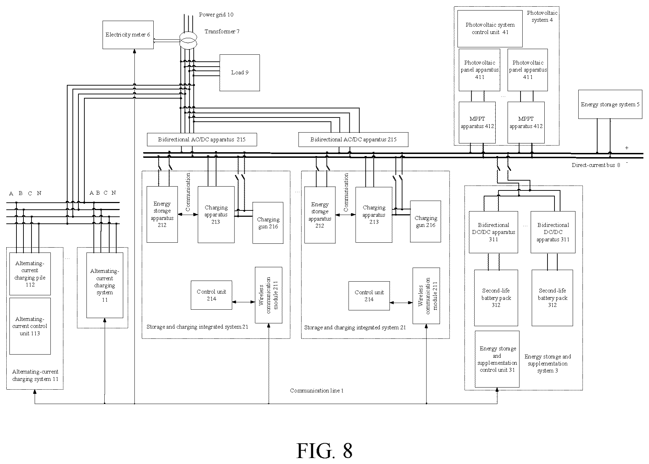

An embodiment of this disclosure provides a hybrid charging system. As shown in FIG. 7 or FIG. 8, the hybrid charging system further includes a photovoltaic system 4 and an energy storage system 5.

The photovoltaic system 4 includes at least one MPPT (maximum power point tracking, Maximum Power Point Tracking) apparatus 412, and a photovoltaic panel apparatus 411 corresponding to the MPPT apparatus 412. One end of the MPPT apparatus 412 is connected to the direct-current bus 8, and the other end is connected to the photovoltaic panel apparatus 411. The MPPT apparatus 412 is configured to enable the photovoltaic panel apparatus 411 to operate close to a maximum power point, and to transfer electrical energy in the photovoltaic panel apparatus 411 to the direct-current bus 8. The photovoltaic panel apparatus 411 is configured to convert solar energy into electrical energy.

Herein, the MPPT apparatus is a key component in the photovoltaic system, and is mainly used to improve utilization of a photovoltaic cell and ensure that the photovoltaic system always operates close to the maximum power point, thereby improving power generation efficiency of the photovoltaic system.

It should be noted that the at least one MPPT apparatus may be Q MPPT apparatuses, in other words, the photovoltaic system 4 includes Q MPPT apparatuses 412, where Q is an integer greater than 1. The electrical energy generated by the photovoltaic panel apparatus 411 is a direct current.

The energy storage system 5 is connected to the direct-current bus 8. The energy storage system 5 is configured to store electrical energy in the direct-current bus 8 or release electrical energy to the direct-current bus 8.

Herein, the energy storage system is a technological apparatus that can store electrical energy and release electrical energy as required. In the charging system, the energy storage system plays a crucial role of storing electrical energy when power supply is adequate and releasing electrical energy when electricity demand increases or supply is inadequate, to satisfy load demand or participate in regulation of the power grid. A type of the energy storage system may include mechanical energy storage, electrical energy storage, electrochemical energy storage, or the like. For example, mechanical energy storage may be pumped storage, compressed air energy storage, flywheel energy storage, or the like. Electrical energy storage may be supercapacitor energy storage, superconducting energy storage, or the like. Electrochemical energy storage may be a lead-acid battery, a lithium-ion battery, a sodium-sulfur battery, a flow battery, and the like.

In some embodiments, the photovoltaic system 4 further includes a photovoltaic system control unit 41.

The photovoltaic system control unit 41 is configured to determine and control operation of the MPPT apparatus 412 in the photovoltaic system 4. The photovoltaic system control unit 41 is connected to the communication line 1 for communication with another system in the hybrid charging system.

Herein, the operation of the MPPT apparatus may include adjusting an operation point of the photovoltaic panel apparatus and transferring electrical energy from the photovoltaic panel apparatus to the direct-current bus.

In some implementations, the photovoltaic system and the energy storage system are optional systems in the hybrid charging system.

Certainly, the hybrid charging system can further support connection of new-energy power generation systems such as a wind power generation system, a hydropower generation system, a biomass power generation system, and a geothermal power generation system. With a new-energy power generation system connected to the hybrid charging system, long-term and stable power supply can be provided for the hybrid charging system, dependence on an energy storage system formed by batteries in the hybrid charging system can be reduced, and environmental pollution is reduced. The composition of the hybrid charging system can be set by persons skilled in the art according to actual requirements. Details are not described herein again.

In this embodiment of this disclosure, the photovoltaic system directly converts solar radiation energy into electrical energy through the photovoltaic panel apparatus. This energy conversion process does not pollute the environment or damage the ecology, and provides clean, safe, and renewable energy sources. The energy storage system can store surplus electrical energy in the hybrid charging system and release electrical energy as required, achieving balance and stable supply of energy. Therefore, with such hybrid charging system including the photovoltaic system and the energy storage system, efficient conversion and storage of energy are achieved, dependence on fossil fuels is reduced, and carbon emissions are reduced, facilitating environmental protection.

It should be understood that the phrases "an embodiment" or "one embodiment" mentioned in this specification mean that a particular feature, structure, or feature described related to the embodiment is included in at least one embodiment of this disclosure. Therefore, the phrases "in one embodiment" or "in some embodiments" mentioned in this specification do not necessarily refer to the same embodiment. Further, these particular features, structures, or characteristics may be combined in any appropriate manner in one or more embodiments. It should be understood that in various embodiments of this disclosure, the sequence numbers of the mentioned processes do not imply order of execution sequences. The order of the execution processes should be determined based on functions and inherent logic of the processes, and should not impose any limitations on the implementation processes of embodiments of this disclosure. The sequence numbers of embodiments of this disclosure mentioned above are merely used for description and do not indicate the quality of the embodiments.

It should be noted that the terms "include", "comprise", and any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not exclude the presence of other identical elements in the process, method, article, or apparatus that includes the element.

In the several embodiments provided in this disclosure, it should be understood that the disclosed device and method may be implemented in other manners. The described apparatus embodiments are merely examples. For example, the unit division is merely logical function division and other division manners may be used in actual implementation. For example, a plurality of units or components may be combined or integrated into another system, or some features may be ignored or not be performed. In addition, the displayed or discussed mutual couplings, direct couplings, or communication connections may be indirect couplings or communication connections through some interfaces, devices, or units, and may be in electrical, mechanical, or other forms.

The units described as separate parts may or may not be physically separate. Parts displayed as units may or may not be physical units, and may be located in one place, or may be distributed in a plurality of network units. Some or all of the units may be selected based on an actual requirement, to achieve the objectives of the solutions in the embodiments.

In addition, all functional units in the embodiments in this disclosure may be integrated into one processing unit, or each unit may be used as a separate unit, or two or more units may be integrated into one unit. The foregoing integrated unit may be implemented in a form of hardware or in a form of hardware and software functional units.

The foregoing descriptions are merely embodiments in this disclosure, but do not limit the protection scope of this disclosure. Any modifications or replacements readily figured out by persons skilled in the art within the technical scope disclosed in this disclosure shall fall within the protection scope of this disclosure. Therefore, the protection scope of this disclosure should be subject to the protection scope of the foregoing solutions.

## Claims

1. A hybrid charging system, comprising at least one storage and charging integrated system and an energy storage and supplementation system; wherein
the storage and charging integrated system comprises an energy storage apparatus and a charging apparatus; wherein
one end of the energy storage apparatus is connected to a direct-current bus, and the other end of the energy storage apparatus is connected to the charging apparatus; and one end of the charging apparatus is connected to a charging gun, and the other end is connected to the direct-current bus;
the charging apparatus is configured to transfer electrical energy in an electric device to the energy storage apparatus and/or a power grid, or to transfer electrical energy in the power grid and/or electrical energy in the energy storage apparatus to the electric device; and
the energy storage and supplementation system comprises a second-life battery pack connected to the direct-current bus, wherein electrical energy in the second-life battery pack is transferred to the storage and charging integrated system through the direct-current bus, or the electrical energy in the power grid or electrical energy in the storage and charging integrated system is stored in the second-life battery pack through the direct-current bus.

2. The hybrid charging system according to claim 1, wherein the charging apparatus comprises a bidirectional DC/DC apparatus; and
the charging apparatus is configured to transfer the electrical energy in the electric device to the energy storage apparatus and/or the power grid, or to transfer the electrical energy in the power grid and/or the electrical energy in the energy storage apparatus to the electric device through the bidirectional DC/DC apparatus.

3. The hybrid charging system according to claim 1, wherein the energy storage and supplementation system comprises at least one bidirectional DC/DC apparatus and a second-life battery pack corresponding to the bidirectional DC/DC apparatus; wherein
one end of the bidirectional DC/DC apparatus is connected to the direct-current bus, and the other end is connected to the second-life battery pack.

4. The hybrid charging system according to claim 3, wherein in a case that the second-life battery pack corresponding to the bidirectional DC/DC apparatus is provided in plurality in the energy storage and supplementation system, the plurality of second-life battery packs are connected in series to form a battery system, and the battery system is connected to the bidirectional DC/DC apparatus.

5. The hybrid charging system according to claim 1, wherein a ratio of rated energy of the energy storage apparatus to a maximum discharge power of the energy storage apparatus is not greater than 1:3.

6. The hybrid charging system according to claims 1 to 5, wherein the energy storage apparatus and/or the charging apparatus satisfies one or more of the following conditions:
an energy density of the energy storage apparatus is greater than or equal to 380 watt-hours per liter;
a ratio of the rated energy of the energy storage apparatus to a maximum charge power of the charging apparatus is less than 1:4; and
a ratio of the rated energy of the energy storage apparatus to a rated power of the energy storage apparatus is less than or equal to 1:4.

7. The hybrid charging system according to claims 1 to 5, wherein the energy storage and supplementation system satisfies the following condition: a ratio of an energy value of a single-cluster battery system to a power value of the bidirectional DC/DC apparatus is not less than 3:1.

8. The hybrid charging system according to any one of claims 1 to 5, wherein the hybrid charging system further comprises a bidirectional AC/DC apparatus in a quantity corresponding to the at least one storage and charging integrated system; wherein
one end of the bidirectional AC/DC apparatus is connected to the power grid, and the other end is connected to the direct-current bus; and the bidirectional AC/DC apparatus is configured to convert the electrical energy in the power grid into a direct current and then transfer the direct current to the direct-current bus, or to convert the electrical energy in the direct-current bus into an alternating current and then transfer the alternating current to the power grid.

9. The hybrid charging system according to any one of claims 1 to 5, wherein the hybrid charging system further comprises a transformer and an electricity meter; and
one end of the transformer is connected to the electricity meter, and the other end is connected to the power grid; the transformer is configured to perform voltage conversion on the electrical energy in the power grid and then provide electrical energy to a load on the power grid or the electric device; and the electricity meter is configured to determine current electrical energy in the transformer.

10. The hybrid charging system according to any one of claims 1 to 5, wherein the hybrid charging system further comprises at least one alternating-current charging system; and
the alternating-current charging system comprises a bidirectional DC/AC apparatus and an alternating-current charging pile; wherein
one end of the bidirectional DC/AC apparatus is connected to the direct-current bus, and the other end is connected to the alternating-current charging pile; and the bidirectional DC/AC apparatus is configured to convert the electrical energy in the direct-current bus into an alternating current and then transfer the alternating current to the alternating-current charging pile, or to convert electrical energy of the alternating-current charging pile into a direct current and then transfer the direct current to the direct-current bus; and
the alternating-current charging pile is configured to transfer the electrical energy from the electric device to the bidirectional DC/AC apparatus, or to transfer the electrical energy from the bidirectional DC/AC apparatus to the electric device.

11. The hybrid charging system according to claim 10, wherein the bidirectional DC/AC apparatus is connected to the alternating-current charging pile through a three-phase wire.

12. The hybrid charging system according to any one of claims 1 to 5, wherein the hybrid charging system further comprises at least one alternating-current charging system; and
the alternating-current charging system comprises an alternating-current charging pile, the alternating-current charging pile is connected to the power grid, the alternating-current charging pile is configured to transfer the electrical energy in the power grid to the electric device, or to transfer the electrical energy in the electric device to the power grid.

13. The hybrid charging system according to claim 12, wherein the alternating-current charging pile is connected to the power grid through a three-phase wire.

14. The hybrid charging system according to any one of claims 1 to 5, wherein the hybrid charging system further comprises a photovoltaic system; and
the photovoltaic system comprises at least one maximum power point tracking apparatus and a photovoltaic panel apparatus corresponding to the maximum power point tracking apparatus; one end of the maximum power point tracking apparatus is connected to the direct-current bus, and the other end is connected to the photovoltaic panel apparatus; the maximum power point tracking apparatus is configured to enable the photovoltaic panel apparatus to operate close to a maximum power point, and to transfer electrical energy in the photovoltaic panel apparatus to the direct-current bus; and the photovoltaic panel apparatus is configured to convert solar energy into electrical energy.

15. The hybrid charging system according to any one of claims 1 to 5, wherein the hybrid charging system further comprises an energy storage system; and
the energy storage system is connected to the direct-current bus; the energy storage system is configured to store electrical energy in the direct-current bus or release electrical energy to the direct-current bus.
